# EUROPEAN PATENT SPECIFICATION

(11) **EP 3 480 919 B1**
(45) Date of publication and mention of the grant of the patent: **19.06.2024**
(21) Application number: 16907205.5
(22) Date of filing: 01.07.2016
(51) Int. Cl.: H02K 3/30, H01B 13/00, H02K 15/12, H01B 19/02, H01B 19/04, H02K 3/40, H02K 3/34

(54) **METHOD FOR PRODUCING ELECTRICAL INSULATING STRUCTURE**
VERFAHREN ZUR HERSTELLUNG EINER ELEKTRISCH ISOLIERENDEN STRUKTUR
PROCÉDÉ DE PRODUCTION D'UNE STRUCTURE ISOLANTE ÉLECTRIQUE

(43) Date of publication of application: 08.05.2019
(73) Proprietor: TMEIC Corporation, Tokyo 104-0031 (JP)
(72) Inventor: MURA, Kotaro, Tokyo 104-0031 (JP); KIKUTA, Shinsuke, Tokyo 104-0031 (JP); TSUDA, Toshihiro, Tokyo 104-0031 (JP); YOSHIMITSU, Tetsuo, Tokyo 104-0031 (JP)
(74) Representative: Winter, Brandl - Partnerschaft mbB
(86) International application number: PCT/JP2016/003162
(87) International publication number: WO 2018/002970

(56) References cited:
- EP-A2- 2 808 981
- WO-A1-2016/104141
- WO-A1-2016/104141
- DE-A1-102011 083 409
- JP-A- H10 174 333
- JP-A- S63 110 929
- US-A1- 2005 208 301
- US-A1- 2006 281 380
- US-A1- 2009 078 450

## Description

### TECHNICAL FIELD

The present invention relates to an electrical insulating structure producing method.

### BACKGROUND ART

When an unequal electric field portion occurs due to application of an electric field to an insulator, and the electric field at that portion exceeds an insulation-breakdown limit voltage, a local breakdown is caused there. When the local breakdown progresses dendritically, an electric tree is generated. The electric tree is believed to be generated by starting from a high electric field concentration parts such as an air gap or foreign matters between an electrode and an insulator, foreign matters, projections and voids in an insulator.

In recent years, the use of inverters have been prevailing. In an inverter-driven motor, the lifetime of an insulating material of a coil conductive wire may be significantly reduced when the motor is used in a state where an impulse voltage including inverter surge repeatedly acts. Therefore, for example, such situation occurs, in which insulation for normal rated voltage 6.6 kV is forced to be used for an inverter-driven motor for rated voltage 3.3 kV.

As an example of an electrical insulating structure for a conductor used in a rotating electrical machine, a coil conductor is typically covered with an insulator having an insulating material. Such a conductor easily reaching high temperatures often has a mica electrical insulating structure using mica which is a kind of silicate minerals as an insulating material of high insulation class capable of withstanding comparatively high temperatures.

When the electric tree progresses, the mica electrical insulating structure may be broken. To understand how the electric tree is generated and how it progresses is extremely important to prevent generation and progress of the electric trees and to maintain the integrity of the rotating electrical machine.

As for the integrity of the insulating material, for example, IEC (International Electrotechnical Commission) is preparing for enactment of international standards prescribing a new insulation test method for accident prevention.

### PRIOR ART DOCUMENT

### PATENT DOCUMENT

US 2015/0101845 A1.

DE 10 2011 083 409 A1 discloses an insulating impregnated with a synthetic resin impregnated with a nano-particulate filler. The nano-particulate filler includes larger particles and smaller particles connected to each other with sintering process.

WO 2016/104141 A1 discloses a method for manufacturing an insulated tape including a step for forming a dispersion liquid containing the mica particles into a sheet and forming a mica tape, and a step for affixing the mica layer to a reinforcing layer containing a fiber reinforcement and then applying a liquid mixture containing a nanofiller and a water-soluble polymer onto the mica layer.

### SUMMARY OF THE INVENTION

### PROBLEMS TO BE SOLVED BY THE INVENTION

For example, the insulation lifetime of a formed-wound electrical motor for high voltage is significantly influenced by a main insulation and a turn insulation which are disposed inside a stator core. In such main insulations and turn insulations, the mica electrical insulating structure is often used.

Further, the mica electrical insulating structure as the main insulation is formed, in most cases, by impregnating a mica insulating tape with epoxy resin. The mica insulating tape is composed of mica and an epoxy glass layer. The mica insulating tape thus configured is wound around a coil conductor and then impregnated with the epoxy resin, whereby insulation treatment by the mica electrical insulating structure is performed.

It was experimentally confirmed that the path of the electric tree in the thus configured mica electrical insulating structure did not penetrate a mica insulating layer but was formed on the epoxy glass layer side outside the mica insulating layer. That is, a weak point in the main insulation was found to exist in the epoxy glass layer.

The present invention has been made based on the above findings, and an object thereof is to suppress the progress of the electric tree in the electrical insulating structure.

### MEANS FOR SOLVING THE PROBLEM

According to the present invention, there is provided a producing method for an electrical insulating structure that covers an outer surface of a to-be-insulated object, the method is set out in the appended set of claims.

There is provided an electrical insulating structure that covers an outer surface of a to-be-insulated object to electrically insulate the to-be-insulated object, the structure comprising: a main insulation layer extending along a surface of the to-be-insulated object; a fiber reinforcement part extending along the main insulation layer; and a macromolecular polymer part formed in the fiber reinforcement part so as to join the main insulation layer and the fiber reinforcement part, wherein nanoparticles are scattered in the macromolecular polymer part. It is useful for understanding the present invention, but not part of the present invention.

There is provided a rotating electrical machine comprising: a rotor having an axially extending rotor shaft and a rotor core attached to radially outside the rotor shaft; a stator having a hollow cylindrical stator core disposed radially outside the rotor core so as to be spaced therefrom and stator winding conductors provided in a plurality of slots formed along an inner surface of the stator core with circumferential intervals therebetween and extending up to axial both ends of the stator core and axially outside the stator core; two bearings axially rotatably supporting the rotor shaft at both sides of the rotor shaft with the stator core axially sandwiched therebetween; a frame housing the rotor core and the stator therein; and an electrical insulating structure applied to the stator winding conductors so as to electrically insulate the stator winding conductors, wherein the electrical insulating structure includes: a main insulation layer extending along a surface of the to-be-insulated object; a fiber reinforcement part extending along the main insulation layer; and a macromolecular polymer part formed in the fiber reinforcement part so as to join the main insulation layer and the fiber reinforcement part, wherein nanoparticles are scattered in the macromolecular polymer part. It is useful for understanding the present invention, but not part of the present invention.

### ADVANTAGE OF THE INVENTION

According to the present invention, it is possible to suppress the progress of the electric tree in the electrical insulating structure.

### BRIEF DESCRIPTION OF THE DRAWINGS

FIG. 1 is a sectional longitudinal view illustrating the configuration of a rotating electrical machine according to an embodiment.
FIG. 2 is a perspective view for explaining an electrical insulating structure and a tape-wound conductor according to the present embodiment.
FIG. 3 is a sectional longitudinal view schematically illustrating the configuration of the main insulation tape of the electrical insulating structure according to the embodiment.
FIG. 4 is a flowchart illustrating the procedure of an electrical insulating structure producing method according to the embodiment.
FIG. 5 is a sectional longitudinal view illustrating a windings-incorporated object of the rotating electrical machine according to the embodiment.
FIG. 6 is a sectional longitudinal view illustrating a state where the vacuum drawing step is performed, in the electrical insulating structure producing method according to the embodiment.
FIG. 7 is a sectional longitudinal view illustrating a state where the macromolecular polymer impregnation step is performed, in the electrical insulating structure producing method according to the embodiment.
FIG. 8 is a sectional longitudinal view schematically illustrating the configuration of the electrical insulating structure according to the embodiment.
FIG. 9 is a sectional longitudinal view schematically illustrating the progress of an electric tree in a conventional electrical insulating structure. The conventional electrical insulating structure does not belong to the invention.
FIG. 10 is a sectional longitudinal view schematically illustrating an effect of the electrical insulating structure according to the embodiment.
FIG. 11 is a sectional longitudinal view schematically illustrating a first test system of the electrical insulating structure according to the embodiment. The embodiment shown in Fig. 11 does not belong to the invention, but is useful to understand the invention.
FIG. 12 is a partial sectional view of a part around the needle electrode, which schematically illustrates the results of the test of the electrical insulating structure according to the embodiment.
FIG. 13 is a sectional view schematically illustrating a second test system of the electrical insulating structure according to the embodiment.

### EMBODIMENTS FOR CARRYING OUT THE INVENTION

Hereinafter, with reference to the accompanying drawings, an electrical insulating structure producing method, an electrical insulating structure and a rotating electrical machine according to embodiments of the present invention will be described. The same or similar portions are represented by the same reference symbols and will not be described repeatedly.

The followings exemplify the cases where an electrical insulating structure is applied to stator winding conductors of a rotating electrical machine, to-be-insulated objects or the objects to be insulated are not limited to the stator winding conductors. That is, it is applicable to any conductors as long as they have a structure where its outer surface is covered by the electrical insulating structure.

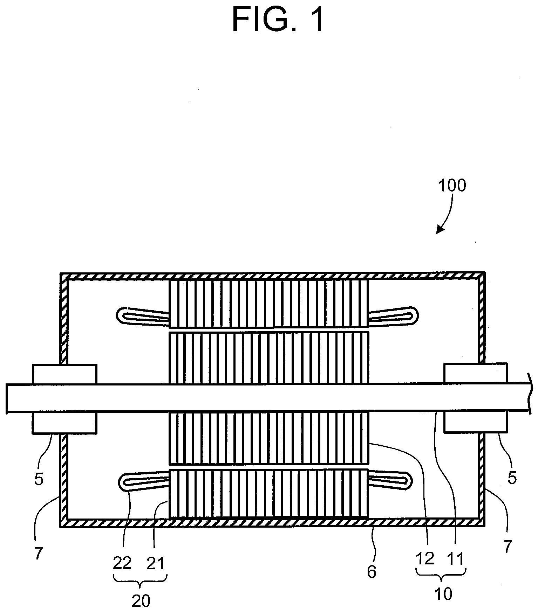

FIG. 1 is a sectional longitudinal view illustrating the configuration of a rotating electrical machine according to an embodiment. A rotating electrical machine 100 has a rotor 10, a stator 20, a frame 6 surrounding the radially outside of the rotor 10 and the stator 20, and bearing brackets 7 attached to both axial ends of the frame 6.

The rotor 10 has a rotor shaft 11 extending in its longitudinal direction and a rotor core 12 attached to radially outside the rotor shaft 11. The rotor shaft 11 is rotatably supported at both axial sides thereof by bearings 5. Each of the bearings 5 is stationarily supported by each of the bearing brackets 7.

The stator 20 has a stator core 21 disposed radially outside the rotor core 12 so as to be spaced therefrom and stator windings 22 penetrating inside the stator core 21.

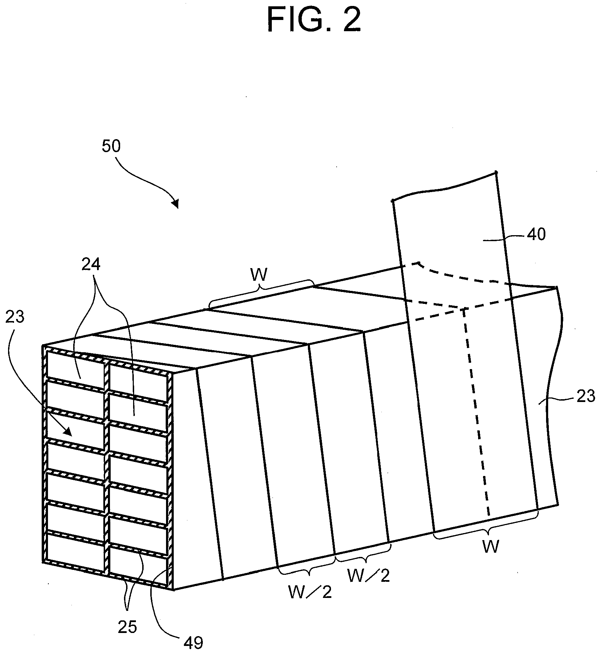

A plurality of stator slots (not illustrated) are formed along the inner surface of the stator core 21 with circumferential intervals therebetween and extend up to axially both ends of the stator core 21. Conductors 24 (FIG. 2) for the stator winding 22 are disposed in each stator slot.

FIG. 2 is a perspective view for explaining an electrical insulating structure and a tape-wound conductor according to the present embodiment.

The plurality of stator winding conductors 24 constituting the stator winding 22 form a laminated conductor 23. Specifically, seven conductors 24 are arranged in one column and two columns form the laminated conductor 23 by fourteen conductors 24 in total. The number of laminated layers and the number of columns mentioned here are merely illustrative, and any number of the conductors 24 may be arranged in one or three or more columns. Each stator winding conductor 24 is applied with a turn insulation 25 provided outside thereof. Accordingly, the outer surface of the laminated conductor 23 is covered by the turn insulation 25.

A main insulation tape 40 serving as a main insulation is wound outside the laminated conductor 23 applied with the turn insulation 25 to form a main insulated part 49 outside the laminated conductor 23, whereby a tape-wound conductor 50 is obtained.

The width of the main insulation tape 40 is assumed to be W. The main insulation tape 40 is helically wound as viewed in the longitudinal direction of the laminated conductor 23. A winding method in this case is a half-wrap method. Specifically, the helical pitch is W/2 which is half the width W of the main insulation tape 40. In other words, the main insulation tape 40 is wound so as to overlap, by half the width, the main insulation tape 40 of the previous turn. However, the winding method is not limited to the half-wrap method. For example, the width of the overlap may be changed. Further, the main insulation tape 40 may be wound such that adjacent ones are positioned without any space between them. In this case, in second winding or in winding secondly, the main insulation tape 40 is wound shifted in the longitudinal direction by half of the width thereof.

After finishing the first winding of the main insulation tape 40 in the longitudinal direction of the laminated conductor 23, the second winding is performed on the first winding, with the result that the main insulation tape 40 has a layered structure. The number of times of the winding of the main insulation tape 40 is not limited to two and may be three or more or one and is determined according to insulating performance required.

Meanwhile, there may be a case where the stator winding conductors 24 are individually applied with insulation treatment and mica insulation treatment is applied outside the insulated stator winding conductors 24.

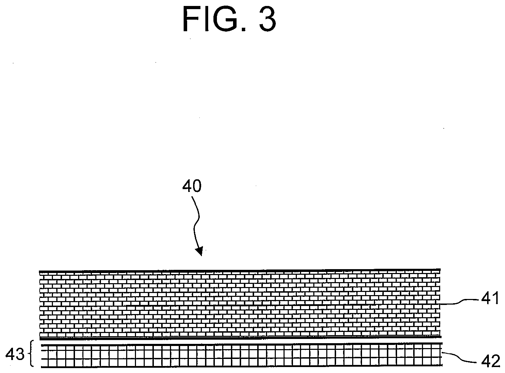

FIG. 3 is a sectional longitudinal view schematically illustrating the configuration of the main insulation tape of the electrical insulating structure according to the embodiment. The main insulation tape 40 constituting the electrical insulating structure 30 has a main insulation layer 41, a fiber reinforcement part 42, and a joining macromolecular polymer 43 that permeates the fiber reinforcement part 42 and functions to join the fiber reinforcement part 42 and the main insulation layer 41. The main insulation layer 41 basically performs insulating function. The fiber reinforcement part 42 supports the main insulation layer 41 therealong to secure the strength of the main insulation tape 40.

The material of the main insulation layer 41 is, e.g., mica, asbestos, porcelain, or the like. The material of the fiber reinforcement part 42 is, e.g., glass fiber or the like, and is generally woven in a mesh pattern. The joining macromolecular polymer 43 is, e.g., unsaturated polyester resin or epoxy resin.

The thickness of the main insulation layer 41 is, e.g., about 100 µm. The thickness of the fiber reinforcement part 42 is smaller than that of the main insulation layer 41 and is, e.g., about 30 µm. While the fiber reinforcement part 42, the joining macromolecular polymer 43, and the main insulation layer 41 are illustrated as the constituent elements of the main insulation tape 40 in FIG. 3, the joining macromolecular polymer 43 is impregnated into the fiber reinforcement part 42 and joins the main insulation layer 41 and the fiber reinforcement part 42. Thus, a part constituted of only the joining macromolecular polymer 43 has nearly no thickness, so that typically the main insulation layer 41 and the fiber reinforcement part 42 is almost in contact with each other.

The main insulation tape 40 is wound with the main insulation layer 41 side facing the to-be-insulated object and the fiber reinforcement part 42 being outside.

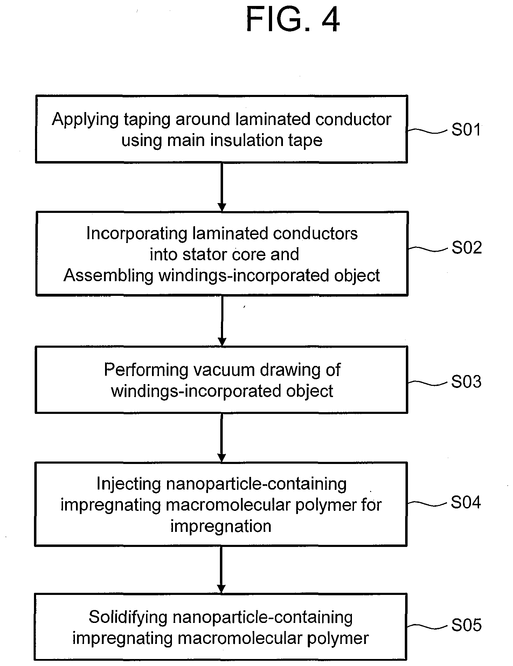

FIG. 4 is a flowchart illustrating the procedure of an electrical insulating structure producing method according to the embodiment.

First, taping is applied around the laminated conductor 23 using the main insulation tape 40 (step S01). As a result, the tape-wound conductor 50 (FIG. 2) is formed.

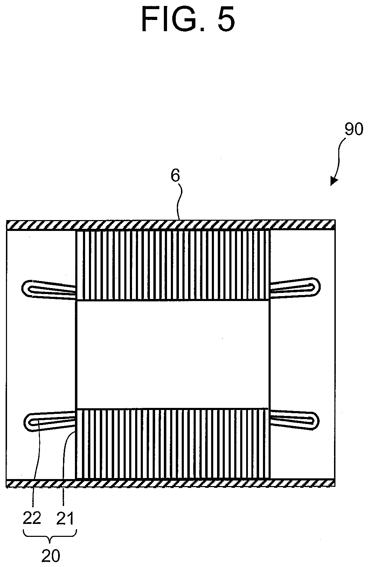

FIG. 5 is a sectional longitudinal view illustrating a windings-incorporated object of the rotating electrical machine according to the embodiment. The windings-incorporated object 90 has the stator core 21, the stator windings 22 and the frame 6 disposed radially outside the stator core 21 and the stator windings 22.

The stator windings 22 are formed by connecting the tape-wound conductors 50 (FIG. 2) housed in the plurality of slots (not illustrated). The slots are formed in the inner surface of the stator core 21 with circumferential intervals therebetween and extend up to the both axial ends of the stator core 21. After step S01, the windings-incorporated object 90 is assembled (step S02) .

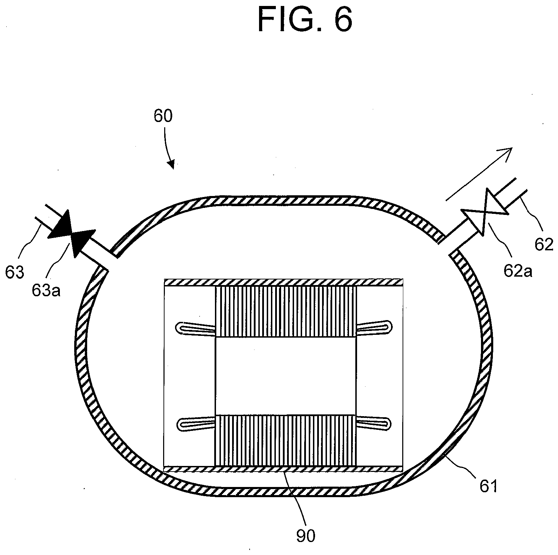

Then, the windings-incorporated object 90 is subjected to vacuum drawing (step S03) . FIG. 6 is a sectional longitudinal view illustrating a state where the vacuum drawing step is performed, in the electrical insulating structure producing method according to the embodiment. Specifically, the windings-incorporated object 90 is housed in a impregnation container 61 of an impregnator 60. The impregnation container 61 can be divided into upper and lower parts, for example, so as to allow the windings-incorporated object 90 to be put in and out thereof. The divided upper and lower parts of the impregnation container 61 can be connected by not-shown flange portions.

A macromolecular polymer supply valve 63a on a macromolecular polymer supply pipe 63 and a vacuum exhaust valve 62a on a vacuum exhaust pipe 62 are closed to bring the impregnation container 61 into a sealed state. After that, the vacuum exhaust valve 62a on the vacuum exhaust pipe 62 connected to, e.g., a vacuum pump (not illustrated) is opened to draw gas in the impregnation container 61. As a result, spaces in the main insulation tape 40 of the tape-wound conductor 50 in the windings-incorporated object 90 housed in the impregnation container 61 are also subjected to vacuum drawing.

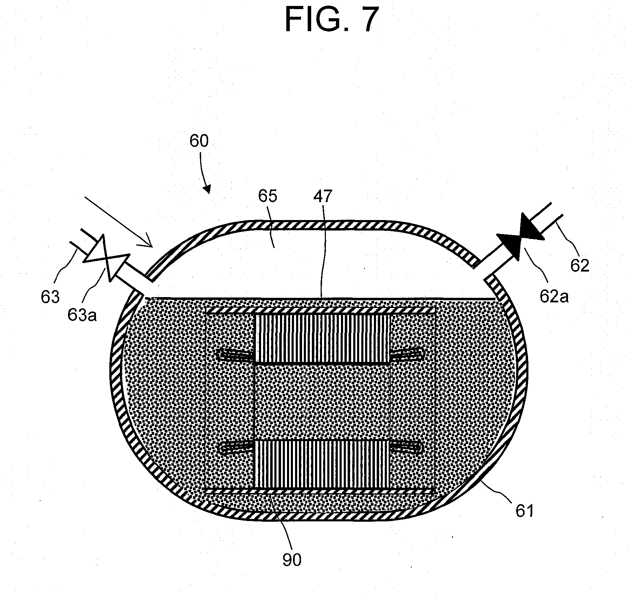

Then, a nanoparticle-containing impregnating macromolecular polymer 47 with which nanoparticles have been kneaded is injected and impregnated (impregnation step S04) . FIG. 7 is a sectional longitudinal view illustrating a state where the macromolecular polymer impregnation step is performed, in the electrical insulating structure producing method according to the embodiment.

Specifically, the vacuum exhaust valve 62a on the vacuum exhaust pipe 62 is closed after the impregnation container 61 is subjected to vacuum drawing in step S03. Then, the macromolecular polymer supply valve 63a on the macromolecular polymer supply pipe 63 is opened to supply the nanoparticle-containing impregnating macromolecular polymer 47 into the impregnation container 61. The nanoparticle-containing impregnating macromolecular polymer 47 is supplied until the windings-incorporated object 90 is sufficiently impregnated with the nanoparticle-containing impregnating macromolecular polymer 47.

The nanoparticle-containing impregnating macromolecular polymer 47 has been kneaded with nanoparticles. Examples of the nanoparticle include silicon dioxide (SiO₂), aluminum oxide (Al₂O₃), magnesium oxide (MgO), boron nitride (BN), and carbon nanotube (CNT) .

Generally, the nanoparticles are said to include particles having a diameter of up to about 100 nm. The nanoparticles used in the present embodiment are assumed to be particles having a diameter of 100 nm or less, i.e., about several tens of nm. It is considered that the following effects cannot be obtained if particles having a diameter of about several hundreds of nm exceeding 100 nm are used.

Particles having a diameter of 100 nm or less may be produced by chemical growth from finer ones. Alternatively, particles having a diameter exceeding 100 nm may be pulverized to produce particles having a diameter of 100 nm or less. Further, surface modification may be applied so as to prevent particle aggregation in the nanoparticle-containing impregnating macromolecular polymer 47.

Hereinafter, a particle having a diameter of 100 nm or less is referred to as a nanoparticle.

When a state is reached where the windings-incorporated object 90 is sufficiently impregnated with the nanoparticle-containing impregnating macromolecular polymer 47, pressurized gas 65 is supplied from the macromolecular polymer supply pipe 63 into the impregnation container 61 to pressurize the impregnation container 61. For example, inert gas having no reactivity with the nanoparticle-containing impregnating macromolecular polymer 47 is used as the pressurized gas 65.

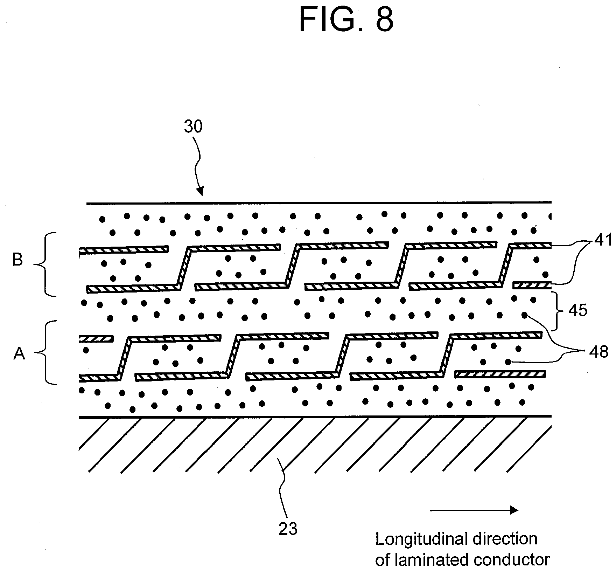

As a result, the nanoparticle-containing impregnating macromolecular polymer 47 permeates the main insulation tape 40 applied around the laminated conductor 23, causing the main insulation tape 40 to be impregnated with the nanoparticle-containing impregnating macromolecular polymer 47 to thereby form a macromolecular polymer part 45 (FIG. 8) . When the nanoparticle-containing impregnating macromolecular polymer 47 permeates the main insulation tape 40, the nanoparticles in the nanoparticle-containing impregnating macromolecular polymer 47 also spread over the main insulation tape 40.

Then, the nanoparticle-containing impregnating macromolecular polymer 47 is solidified (step S05). Specifically, the windings-incorporated object 90 is taken out of the impregnation container 61, and the macromolecular polymer part 45 (FIG. 8) mainly containing the nanoparticle-containing impregnating macromolecular polymer 47 is solidified. When the macromolecular polymer is thermosetting resin such as epoxy resin, it is solidified by heating. When the macromolecular polymer is thermoplastic resin, it is solidified by cooling.

FIG. 8 is a sectional longitudinal view schematically illustrating the configuration of the electrical insulating structure according to the embodiment. FIG. 8 illustrates the cross-section of the electrical insulating structure along the longitudinal direction of the laminated conductor 23 to be insulated. In FIG. 8, the main insulation tape 40 is wound twice (two rounds), and two taping layers A and B are formed by the first winding and by the second winding, respectively.

The electrical insulating structure 30 has the main insulation layer 41 which is the main insulating part of the main insulation tape 40 (FIG. 3), the fiber reinforcement part 42 (FIG. 3) and the macromolecular polymer part 45. The macromolecular polymer part 45 is formed by permeation of the nanoparticle-containing impregnating macromolecular polymer 47 into the joining macromolecular polymer 43 existing in the fiber reinforcement part 42 and between the fiber reinforcement part 42 and the main insulation layer 41. The macromolecular polymer part 45 is formed also outside the main insulation layer 41 by the nanoparticle-containing impregnating macromolecular polymer 47 adhering in the impregnation treatment. Thus, the macromolecular polymer part 45 is integrally formed not only inside the fiber reinforcement part 42, but also on the surface of the main insulation layer 41 as illustrated in FIG. 8.

In FIG. 8 and subsequent figures, to emphasize the macromolecular polymer part 45 intruding into the fiber reinforcement part 42, the thickness of the main insulation layer 41 is shown to be extremely smaller than the actual dimension, and illustration of the fiber reinforcement part 42 is omitted.

In each of the taping layers A and B, the main insulation layers 41 disposed adjacent to each other overlap each other by half the width along the longitudinal direction of the laminated conductor 23. This is a result of the way of winding the main insulation tape 40 described above.

Nanoparticles 48 contained in the nanoparticle-containing impregnating macromolecular polymer 47 are scattered in the macromolecular polymer part 45 around the main insulation layer 41.

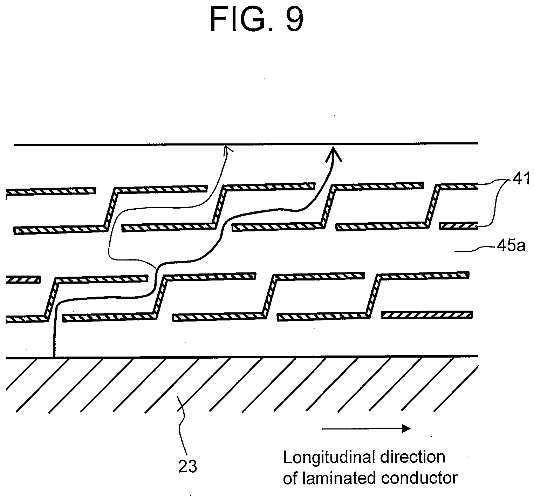

FIG. 9 is a sectional longitudinal view schematically illustrating the progress of an electric tree in a conventional electrical insulating structure, which does not belong to the invention. The curved bold arrows schematically denote the progress path of the electric tree. A macromolecular polymer part 45a does not contain the nanoparticles. The electric tree generated from the laminated conductor 23 passes the macromolecular polymer part 45a between the main insulation layers 41 in the shortest route and reaches the surface.

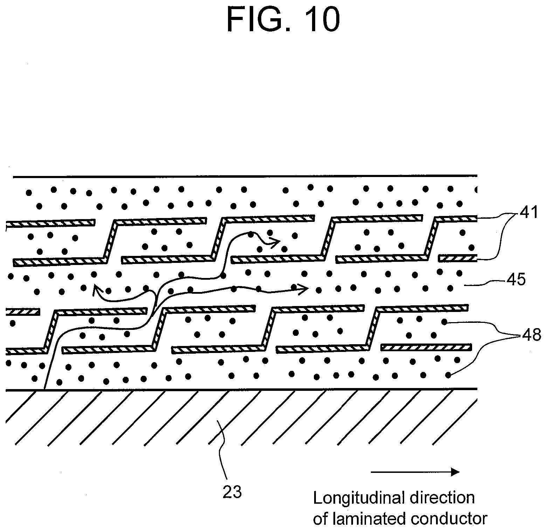

FIG. 10 is a sectional longitudinal view schematically illustrating an effect of the electrical insulating structure according to the embodiment. In the electrical insulating structure 30 according to the present embodiment, nanoparticles 48 are scattered in the macromolecular polymer part 45 between the main insulation layers 41. Therefore, unlike the case where the electric tree progresses in the shortest route due to the absent of the nanoparticles 48, the electric tree progresses while changing its direction by the existence of the nanoparticles 48 . As a result, the progress speed of the electric tree is significantly reduced as compared to that in the case where the nanoparticles 48 are absent, or the progress of the electric tree is stopped on the way.

A test was performed to confirm how the electric tree progresses in the presence of the nanoparticles. The results of the test will be described below.

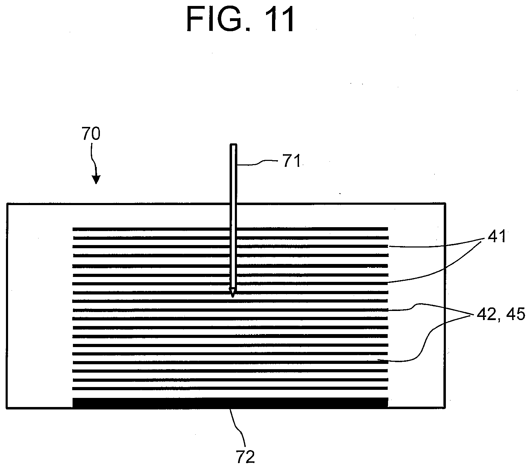

FIG. 11 is a sectional longitudinal view schematically illustrating a first test system of the electrical insulating structure according to the embodiment. This embodiment does not belong to the invention, but is useful to understand the invention. A first test body 70 simulates a state where a plurality of mica tapes are laminated. Thus, the material of the main insulation layer 41 is mica, that of the fiber reinforcement part 42 is glass fiber, and that of the macromolecular polymer part 45 is epoxy resin. The epoxy resin does not contain the nanoparticles.

A plurality of the main insulation layers 41 are laminated so as to be almost parallel with each other. The fiber reinforcement part 42 and the macromolecular polymer part 45 are provided between the adjacent main insulation layers 41.

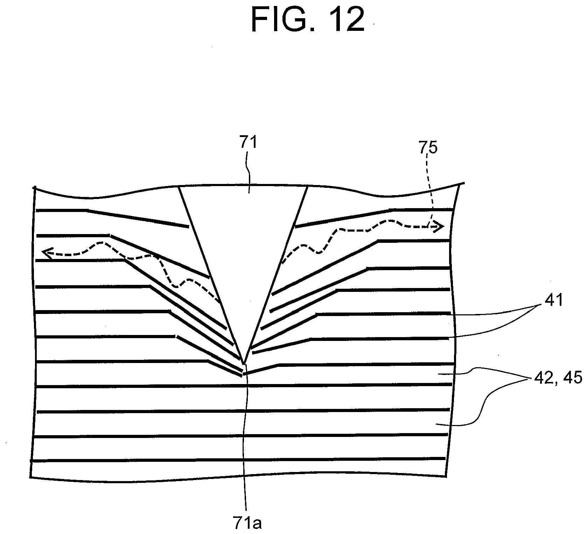

The thickness of each main insulation layer 41 is 100 µm to 140 µm, and the thicknesses of each layer of the fiber reinforcement part 42 and each layer of the macromolecular polymer part 45 are both 10 µm to 40 µm. However, as described above, in FIGS. 11 and 12, the thickness of the main insulation layer 41 is shown to be extremely small, and the fiber reinforcement part 42 is omitted in order to emphasize the macromolecular polymer part 45 permeating into the fiber reinforcement part 42.

A first test system was set, in which a needle electrode 71 was inserted into substantially the center position of the first test body 70 in a plan view. In this system, an alternating current of 50 Hz was applied between the needle electrode 71 and a grounding plate 72, and a partial discharge starting voltage was measured. After measuring of the partial discharge starting voltage, the applied voltage was boosted at a rate of 600 V/sec until occurrence of the dielectric breakdown of the sample.

FIG. 12 is a partial sectional view of a part around the needle electrode, which schematically illustrates the results of the test of the electrical insulating structure according to the embodiment. As a result of the test, as denoted by the dashed arrow in FIG. 12, an electric tree 75 passes between the upper and lower main insulation layers 41 adjacent to each other and progresses in a direction where the main insulation layer 41 spreads. The electric tree 75 is generated not from a tip end part 71a of the needle electrode 71 where the strength of an electric field is the highest but from a position slightly deviated from the tip end part 71a (position slightly closer to the root side of the needle electrode 71 than to the tip end part 71a of FIG. 12) . The electric tree 75 progresses while spreading in a direction where the main insulation layer 41 spreads.

The results of the test in the first test system using the first test body 70 reveal that a resin part in the fiber reinforcement part 42 between the adjacent main insulation layers 41 is weak.

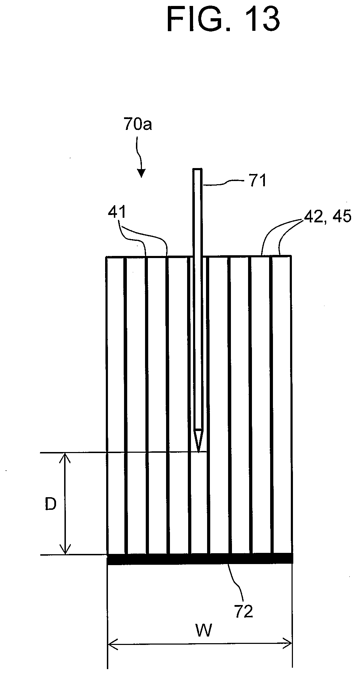

FIG. 13 is a sectional view schematically illustrating a second test system of the electrical insulating structure according to the embodiment. Taking the test results obtained by the first test body, the test was performed, for a case where the nanoparticles were absent in the macromolecular polymer part 45 and other case where the nanoparticles were present, with the needle electrode inserted into the fiber reinforcement part 42 between the adjacent main insulation layers 41.

Like the first test body 70, a second test body 70a simulates a state where a plurality of mica tapes are laminated. The material of the main insulation layer 41 is mica, that of the fiber reinforcement part 42 is glass fiber, and that of the macromolecular polymer part 45 is epoxy resin. The epoxy resin contains the nanoparticles in some cases and does not contain them in the other cases.

A plurality of the main insulation layers 41 are laminated so as to be almost parallel with each other. The fiber reinforcement part 42 and the macromolecular polymer part 45 are disposed between the adjacent main insulation layers 41. The grounding plate 72 is disposed at the end portions of the main insulation layer 41 and the fiber reinforcement part 42. The needle electrode 71 is inserted into an area including the fiber reinforcement part 42 and the macromolecular polymer part 45 between the adjacent main insulation layers 41. The width W of the grounding plate 72 is about 4 mm, and the depth thereof is about 25 mm. The distance D between the needle electrode 71 and the grounding plate 72 is about 3 mm.

In the test, the values of the time until the occurrence of dielectric breakdown under a condition that a voltage of 15 kV are maintained after an increase in the voltage from 1 kV to 15 kV by 1 kV steps was compared between two cases. In the first case, nanoparticles were absent in the macromolecular polymer part 45. In the second case, the nanoparticles were present. In the test results, the time was about 1.9 hours in the first case where nanoparticles were absent, while the time was three weeks or more in the second case where the nanoparticles were present. In the second case, the average particle diameter of the nanoparticles was 10 nm to 20 nm, and the mixture ratio of the nanoparticles was 10 wt%.

As described above, when the nanoparticles are mixed in the macromolecular polymer part 45, electrical insulation lifetime is significantly prolonged.

Further, it is known that heat conductivity and mechanical strength increase when the nanoparticles are mixed in the macromolecular polymer part 45.

For example, the heat conductivity is, e. g., about 0.25 W/m·K when the nanoparticles are not mixed in the macromolecular polymer part 45, while it increases up to, e.g., about 0.40 W/m·K when mixed. As a result, heat radiation effect can be made higher, allowing more current to flow, which in turn can enhance electrical power density, i.e., electrical power per unit volume.

Further, the increase in the mechanical strength eliminates the conventional need for a temporary reinforcement for fixing the windings, thereby improving efficiency of assembly work.

As described above, according to the present embodiment, the propagation of the electric tree in the electrical insulating structure can be suppressed to thereby enhance electrical power density and improve the efficiency of assembly work.

### [Other Embodiments]

While the embodiment of the present inventions has been described, the embodiment has been presented by way of example only, and is not intended to limit the scope of the invention. For example, although the main insulation tape is wound by the half-wrap method in the above embodiment, the present invention is not limited thereto. For example, a winding method in which the end portions of the main insulation tape are adjacent in the longitudinal direction may be adopted.

Furthermore, the above-described embodiments may be put to use in various different ways and, if appropriate, any of the components thereof may be omitted, replaced or altered in various different ways without departing from the scope of the invention.

Therefore, all the above-described embodiments and the modifications made to them are within the scope of the present invention, which is specifically defined by the appended claims.

### EXPLANATION OF REFERENCE SYMBOLS

5: bearing, 6: frame, 7: bearing bracket, 10: rotor, 11: rotor shaft, 12: rotor core, 20: stator, 21: stator core, 22: stator winding, 23: laminated conductor, 24: stator winding conductor, 25: insulation, 40: main insulation tape, 41: main insulation layer, 42: fiber reinforcement part, 43: joining macromolecular polymer, 45, 45a: macromolecular polymer part, 47: nanoparticle-containing impregnating macromolecular polymer, 48: nanoparticle, 49: main insulated part, 50: tape-wound conductor, 60: impregnator, 61: impregnation container, 62: vacuum exhaust pipe, 62a: vacuum exhaust valve, 63: macromolecular polymer supply pipe, 63a: macromolecular polymer supply valve, 65: pressurized gas, 70: first test body, 70a: second test body, 71: needle electrode, 71a: tip end part, 72: grounding plate, 75: electric tree, 90: windings-incorporated object, 100: rotating electrical machine

## Claims

1. A producing method for an electrical insulating structure (30) that covers an outer surface of a to-be-insulated object, the method comprising:
a taping step (S01) of winding a main insulation tape (40) on outside of the to-be-insulated object to form a main insulated part (49);
a vacuum drawing step (S03), which is performed after the taping step (S01), of vacuum drawing an impregnation container (61) housing the tape-wound to-be-insulated object, wherein the main insulation tape (40) includes a main insulation layer (41) and a fiber reinforcement part (42) that extends along the main insulation layer (41) and supports it, and
an impregnation step (S04), which is performed after the vacuum drawing step (S03), of injecting a nanoparticle-containing impregnating macromolecular polymer (47) in which nanoparticles (48) having a diameter of 100nm or less have been kneaded into the impregnation container (61), impregnating the main insulation tape (40) with the nanoparticle-containing impregnating macromolecular polymer (47), and forming a macromolecular polymer part (45) by permeation of the nanoparticle-containing impregnating macromolecular polymer (47) into a joining macromolecular polymer (43) existing in the fiber reinforcement part (42) and between the fiber reinforcement part (42) and the main insulation layer (41) and by adhering of the nanoparticle-containing impregnating macromolecular polymer (47) to outside of the main insulation layer (41) .

2. The producing method for an electrical insulating structure (30) according to claim 1, wherein
the to-be-insulated object is a laminated conductor (23) for stator windings (22) of a rotating electrical machine (100),
the method further comprises, after the taping step (S01) and before the vacuum drawing step (S03), an assembly step (S02) of incorporating the tape-wound laminated conductor (23) into a stator (20) to assemble a windings-incorporated object (90), and
the vacuum drawing step (S03) vacuums the windings-incorporated object (90) to thereby vacuum the tape-wound to-be-insulated object to be insulated.

3. The producing method for an electrical insulating structure (30) according to claim 1 or 2, wherein
in the taping step (S01), the main insulation tape (40) is wound by a half-wrap method of overlapping each turn of the tape by half width of the tape.

4. The producing method for an electrical insulating structure (30) according to any one of claims 1 to 3, wherein
the nanoparticles (48) are at least one of silicon dioxide, aluminum oxide, magnesium oxide, and boron nitride.

## Patentansprüche

1. Herstellungsverfahren für eine elektrisch isolierende Struktur (30), die eine äußere Oberfläche eines zu isolierenden Objekts bedeckt, wobei das Verfahren Folgendes umfasst:
einen Umwicklungsschritt (S01), bei dem ein Hauptisolierband (40) auf die Außenseite des zu isolierenden Objekts gewickelt wird, um ein Hauptisolierteil (49) zu formen;
einen Vakuumziehschritt (S03), der nach dem Umwicklungsschritt (S01) durchgeführt wird, bei dem Vakuumziehen eines Imprägnierbehälters (61) durchgeführt wird, in dem das mit Band umwickelte, zu isolierende Objekt untergebracht ist, wobei das Hauptisolierband (40) eine Hauptisolierschicht (41) und ein faserverstärktes Teil (42) umfasst, das sich entlang der Hauptisolierschicht (41) erstreckt und diese trägt, und
einen Imprägnierschritt (S04), der nach dem Vakuumziehschritt (S03) durchgeführt wird, bei dem ein nanopartikelhaltiges, imprägnierendes, makromolekulares Polymer (47), in das Nanopartikel (48) mit einem Durchmesser von 100 nm oder weniger eingeknetet wurden, in den Imprägnierbehälter (61) eingespritzt wird, bei dem das Hauptisolierband (40) mit dem nanopartikelhaltigen, imprägnierenden, makromolekularen Polymer (47) imprägniert wird und bei dem ein makromolekulares Polymerteil (45) gebildet wird durch Permeation des nanopartikelhaltigen, imprägnierenden, makromolekularen Polymers (47) in ein verbindendes, makromolekulares Polymer (43), das in dem faserverstärkten Teil (42) und zwischen dem faserverstärkten Teil (42) und der Hauptisolierschicht (41) existiert, und durch Anhaften des nanopartikelhaltigen, imprägnierenden, makromolekularen Polymers (47) an der Außenseite der Hauptisolierschicht (41).

2. Herstellungsverfahren für eine elektrisch isolierende Struktur (30) nach Anspruch 1, wobei
das zu isolierende Objekt ein laminierter Leiter (23) für Statorwicklungen (22) einer rotierenden, elektrischen Maschine (100) ist,
das Verfahren ferner nach dem Umwicklungsschritt (S01) und vor dem Vakuumziehschritt (S03) einen Montageschritt (S02) umfasst, bei dem der mit Band umwickelte, laminierte Leiter (23) in einen Stator (20) eingefügt wird, um ein mit Wicklungen versehenes Objekt (90) zusammenzufügen, und
der Vakuumziehschritt (S03) das mit Wicklungen versehene Objekt (90) unter Vakuum setzt, um das mit Band umwickelte, zu isolierende Objekt (90) unter Vakuum zu setzen, um es dadurch zu isolieren.

3. Herstellungsverfahren für eine elektrisch isolierende Struktur (30) nach Anspruch 1 oder 2, wobei
im Umwicklungsschritt (S01) das Hauptisolierband (40) in einem Halbwickelverfahren gewickelt wird, wobei jede Windung des Bandes um die halbe Breite des Bandes überlappt wird.

4. Herstellungsverfahren für eine elektrisch isolierende Struktur (30) nach einem der Ansprüche 1 bis 3, wobei
die Nanopartikel (48) mindestens ein Element aus der Gruppe von Siliziumdioxid, Aluminiumoxid, Magnesiumoxid und Bornitrid sind.

## Revendications

1. Procédé de production d'une structure d'isolation électrique (30) qui recouvre une surface externe d'un objet à isoler, le procédé comprenant :
une étape de rubanage (S01) consistant à enrouler un ruban isolant principal (40) sur l'extérieur de l'objet à isoler pour former une partie isolée principale (49) ;
une étape de mise sous vide (S03), qui est réalisée après l'étape de rubanage (S01), consistant à mettre sous vide un récipient d'imprégnation (61) abritant l'objet à isoler enroulé, dans lequel le ruban isolant principal (40) inclut une couche d'isolation principale (41) et une partie de renforcement en fibres (42) qui s'étend le long de la couche d'isolation principale (41) et la supporte, et
une étape d'imprégnation (S04), qui est réalisée après l'étape de mise sous vide (S03), consistant à injecter un polymère macromoléculaire d'imprégnation contenant des nanoparticules (47) dans lequel des nanoparticules (48) présentant un diamètre de 100 nm ou moins ont été malaxées dans le récipient d'imprégnation (61), imprégner le ruban isolant principal (40) avec le polymère macromoléculaire d'imprégnation contenant des nanoparticules (47), et former une partie polymère macromoléculaire (45) par perméation du polymère macromoléculaire d'imprégnation contenant des nanoparticules (47) dans un polymère macromoléculaire de liaison (43) existant dans la partie de renforcement en fibres (42) et entre la partie de renforcement en fibres (42) et la couche d'isolation principale (41) et par adhérence du polymère macromoléculaire d'imprégnation contenant des nanoparticules (47) à l'extérieur de la couche d'isolation principale (41).

2. Procédé de production d'une structure d'isolation électrique (30) selon la revendication 1, dans lequel
l'objet à isoler est un conducteur stratifié (23) pour enroulements statoriques (22) d'une machine électrique tournante (100),
le procédé comprend en outre, après l'étape de rubanage (S01) et avant l'étape de mise sous vide (S03), une étape d'assemblage (S02) consistant à incorporer le conducteur stratifié enroulé (23) dans un stator (20) pour assembler un objet incorporé aux enroulements (90), et
l'étape de mise sous vide (S03) met sous vide l'objet incorporé aux enroulements (90) pour mettre ainsi sous vide l'objet à isoler enroulé pour qu'il soit isolé.

3. Procédé de production d'une structure d'isolation électrique (30) selon la revendication 1 ou 2, dans lequel
lors de l'étape de rubanage (SO1), le ruban isolant principal (40) est enroulé par un procédé de demi-enveloppement consistant à faire chevaucher chaque tour du ruban sur la moitié de la largeur du ruban.

4. Procédé de production d'une structure d'isolation électrique (30) selon l'une quelconque des revendications 1 à 3, dans lequel
les nanoparticules (48) sont au moins l'un de dioxyde de silicium, d'oxyde d'aluminium, d'oxyde de magnésium et de nitrure de bore.
